(19) **Europäisches Patentamt / European Patent Office / Office européen des brevets**

(11) **EP 1 729 408 B1**

(12) **FASCICULE DE BREVET EUROPEEN**

(45) Date de publication et mention
de la délivrance du brevet:
**22.07.2009 Bulletin 2009/30**

(51) Int Cl.:
*H02P 23/00* *(2006.01)*

(21) Numéro de dépôt: **06010630.9**

(22) Date de dépôt: **24.05.2006**

(54) **Actionneur et procédé de fonctionnement d'un tel actionneur**

Betätiger und Betriebsverfahren dafür

Actuator and method of operating thereof

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **01.06.2005 FR 0505559**

(43) Date de publication de la demande:
**06.12.2006 Bulletin 2006/49**

(73) Titulaire: **Somfy SAS**
**74300 Cluses (FR)**

(72) Inventeur: **Bruno, Serge**
**74460 Marnaz (FR)**

(74) Mandataire: **Bugnion Genève**
**BUGNION S.A.**
**Case 375**
**1211 Genève 12 (CH)**

(56) Documents cités:
**EP-A- 1 186 741          WO-A-20/04109903**

**Description**

L'invention concerne un actionneur défini par
le préambule de la revendication 8. Elle concerne également un procédé de fonctionnement d'un tel actionneur.

L'actionneur est destiné à l'entraînement d'une
charge mobile dans un bâtiment, telle qu'un dispositif de
fermeture, de protection solaire, un écran de projection
ou similaire.

Un moteur monophasé à induction comprend
un premier bobinage et un deuxième bobinage, ces deux
bobinages présentant un point commun reliant l'une des
extrémités de chaque bobinage. L'autre extrémité du premier bobinage est reliée à la première borne de phase
et l'autre extrémité du deuxième bobinage est reliée à la
deuxième borne de phase. Un condensateur moteur CM
est disposé entre ces deux autres extrémités. Ainsi, selon
qu'une tension est appliquée entre la première borne de
phase et le point commun ou entre la deuxième borne
de phase et le point commun, soit le condensateur est
placé en série avec le deuxième bobinage et le moteur
tourne dans un premier sens, soit le condensateur est
placé en série avec le premier bobinage et le moteur
tourne dans un deuxième sens. Le bobinage se trouvant
en série avec le condensateur est qualifié d'auxiliaire,
l'autre étant alors qualifié de principal.

Un premier problème se pose avec un tel actionneur lorsqu'il comprend un seul interrupteur commandé, celui-ci étant disposé sur le conducteur de neutre
et servant notamment à couper automatiquement l'alimentation du moteur quand un obstacle est détecté ou
quand une position particulière est atteinte. En effet,
quand cet interrupteur est ouvert, la tension aux bornes
du condensateur moteur est nulle puisque aucun courant
ne circule dans le bobinage auxiliaire. La deuxième borne
de phase prend donc un potentiel égal à celui de la première borne de phase quand l'interrupteur de commande
du moteur relie la phase du secteur à la première borne
P1. Il est par conséquent impossible d'identifier la nature
de l'ordre de commande appliquée.

Cela peut paraître sans conséquence : en effet,
dès que l'interrupteur commandé est fermé, le moteur
tourne nécessairement dans le sens imposé par la position de l'interrupteur de commande. En fait, si le moteur
est équipé d'un système de détection de la charge (par
exemple par analyse du couple du moteur), il est important que l'électronique de commande du moteur reconnaisse l'ordre de commande appliqué afin de choisir en
conséquence des seuils ou des algorithmes de commande. En effet, ces seuils ou algorithmes peuvent être différents selon que la charge est menée (par exemple montée d'un volet roulant) ou menante (par exemple descente d'un volet roulant).

Un second problème se pose lorsque cet interrupteur commandé est fermé : quand le moteur est alimenté dans un sens, il est indispensable de pouvoir identifier une manoeuvre brutale de l'interrupteur de commande depuis la première position vers la deuxième position. Une telle inversion de l'alimentation conduit à la
fois à une surintensité importante et à un à-coup mécanique provoquant une usure prématurée des composants.

Ces problèmes sont notamment présentés
dans la demande de brevet WO 2004/109903. La solution proposée est d'utiliser une mesure de déphasage
permettant d'identifier un léger écart de phase entre les
potentiels des premier et deuxième conducteurs de phase. Le montage utilise non seulement des résistances
permettant de faire chuter la tension appliquée au microcontrôleur mais aussi des condensateurs devant supporter la tension du secteur. De tels condensateurs sont
coûteux. Malgré ce surcoût, le montage décrit est intéressant dans le cas où une mesure de déphasage des
tensions est exploitée pour le contrôle de la charge du
moteur, puisque les composants ont alors une double
fonction. Cependant, comme décrit plus bas, une telle
méthode est moins précise qu'une mesure de la tension
aux bornes du condensateur moteur.

Un troisième problème concerne la mesure indirecte du couple exercé par le moteur de l'actionneur
sur la charge mobile. Il est par exemple connu de la demande de brevet FR 2 770 699 de mesurer indirectement
ce couple, ou les variations de ce couple, à partir de la
tension aux bornes du condensateur moteur, ou encore
mieux par diverses combinaisons de l'amplitude de la
tension aux bornes du bobinage principal et de l'amplitude de la tension aux bornes du bobinage auxiliaire.
Dans tous les cas, il y a donc nécessité de pouvoir identifier de la manière la plus simple possible les instants
précis où une mesure donnera l'amplitude de l'une ou
l'autre de ces tensions, ou encore d'une combinaison de
ces tensions permettant une mesure indirecte du couple
ou de ses variations.

Le but de l'invention est de fournir un actionneur
et un procédé de fonctionnement d'un actionneur permettant de pallier aux problèmes cités et d'améliorer les
actionneurs et procédés connus de l'art antérieur. En particulier, l'actionneur et le procédé selon l'invention permettent, de manière simple, l'identification des ordres de
commande même lorsque l'interrupteur commandé permettant l'alimentation du moteur est ouvert. Ils permettent en outre la détection d'une manoeuvre brutale de
l'interrupteur de commande.

L'invention permet en outre d'identifier de manière simple les instants où une mesure de tension donne
l'amplitude d'une des tensions, par exemple la tension
aux bornes du condensateur moteur, ou la tension aux
bornes de l'un des bobinages. L'invention permet en particulier une mesure directe d'une grandeur directement
égale ou proportionnelle à la différence des amplitudes
de la tension aux bornes du condensateur moteur et de
la tension aux bornes du bobinage principal.

L'actionneur selon l'invention est caractérisé
par la partie caractérisante de la revendication 8.

Différents modes de réalisation de l'actionneur

2

sont définis par les revendications dépendantes 9 à 13.

Le procédé de fonctionnement selon l'invention est défini par la revendication 1.

Différents modes d'exécution du procédé selon l'invention sont définis par les revendications dépendantes 2 à 7.

L'invention concerne aussi un procédé de mesure défini par la revendication 14.

L'invention concerne encore un actionneur défini par la revendication 15.

Le dessin annexé représente, à titre d'exemples, différents modes de réalisation d'un dispositif selon l'invention.

La figure 1 est un schéma d'un premier mode de réalisation d'un dispositif d'actionneur selon l'invention.

La figure 2 est un schéma simplifié du premier mode de réalisation lorsque l'interrupteur commandé est ouvert.

La figure 3 est un schéma simplifié d'un deuxième mode de réalisation d'un dispositif d'actionneur selon l'invention.

La figure 4 est un schéma d'un troisième mode de réalisation d'un dispositif d'actionneur selon l'invention.

La figure 5 est un oscillogramme expliquant le fonctionnement du premier mode de réalisation du dispositif.

La figure 6 est un oscillogramme expliquant le fonctionnement du premier mode de réalisation du dispositif dans le cas où il est utilisé à vide.

La figure 7 est un oscillogramme expliquant le fonctionnement du deuxième mode de réalisation du dispositif selon l'invention.

La figure 8 est un oscillogramme expliquant le fonctionnement d'une première variante du troisième mode de réalisation du dispositif selon l'invention.

La figure 9 est un oscillogramme expliquant le fonctionnement d'une deuxième variante du troisième mode de réalisation du dispositif selon l'invention.

La figure 10 est un ordinogramme d'un premier mode d'exécution du procédé de fonctionnement selon l'invention.

La figure 11 est un ordinogramme d'un deuxième mode d'exécution du procédé de fonctionnement selon l'invention.

La figure 12 est un ordinogramme d'un procédé de mesure des variations du couple d'un moteur selon l'invention.

La figure 13 est un schéma d'un mode de réalisation simplifié d'un dispositif d'actionneur selon l'invention.

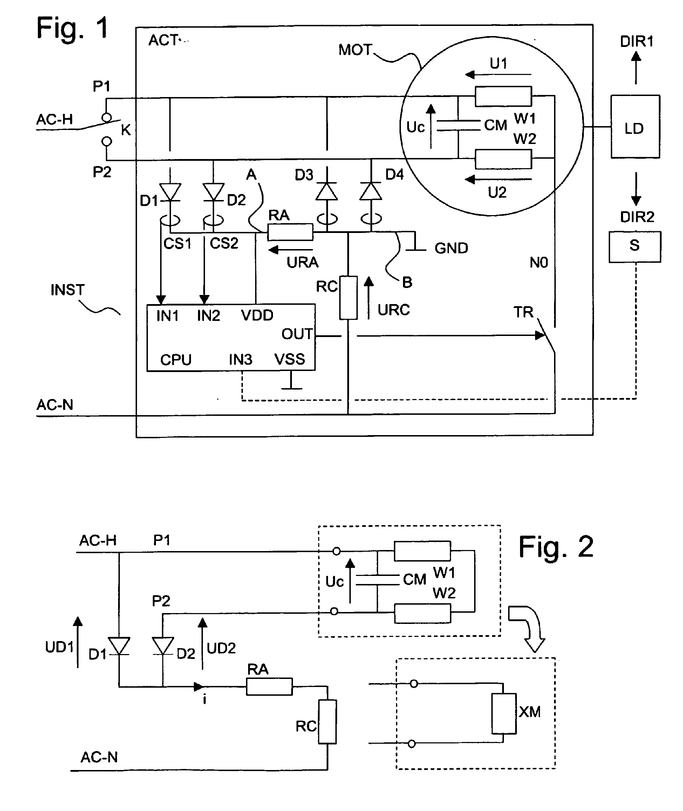

La figure 1 décrit une installation INST comprenant un actionneur ACT selon l'invention. L'actionneur ACT est raccordé au réseau alternatif commercial (par exemple 230 V - 50 Hz) par une liaison permanente avec le conducteur de neutre du réseau AC-N et au moyen d'un interrupteur inverseur à trois positions K permettant la connexion d'une première borne de phase P1 ou d'une deuxième borne de phase P2 au conducteur de phase du réseau AC-H. Dans la troisième position, l'inverseur K n'établit aucune connexion avec les bornes de phase. L'interrupteur inverseur K peut être à commande manuelle. Il peut également être commandé par une bobine de relais elle-même pilotée par des moyens de réception d'ordres à distance tels que par exemple un récepteur d'ordres radioélectriques. L'interrupteur inverseur K peut éventuellement être intégré dans l'actionneur.

L'actionneur entraîne une charge LD selon un premier sens DIR1 quand l'inverseur K relie la phase AC-H à la première borne de phase P1 et selon un deuxième sens DIR2 quand l'inverseur K relie la phase AC-H à la deuxième borne de phase P2. Cependant, l'alimentation du moteur MOT de l'actionneur n'est effective que si un interrupteur commandé TR, disposé entre le point N0 commun aux deux bobinages W1 et W2 du moteur et le conducteur de neutre AC-N, est fermé.

Une unité de commande CPU permet de surveiller le mouvement de la charge LD et de provoquer l'ouverture de l'interrupteur commandé TR dans des situations spécifiques, par exemple lors d'une variation anormale ou attendue de charge du moteur due à un obstacle imprévisible ou à butée fixe ou encore lors d'une arrivée de la charge dans une position particulière mémorisée dans l'unité de commande. L'installation comporte éventuellement un capteur S de position de la charge relié à l'unité de commande CPU. Dans les dispositifs les plus simples, il n'y a pas de capteur de position, celle-ci pouvant être estimée par mesure du temps d'activation du moteur si besoin. Par contre, il est utile de disposer d'une mesure de l'effort exercé par la charge.

Un condensateur moteur CM est disposé entre les deux extrémités non communes des bobinages W1 et W2 du moteur. Le moteur comprend également un frein d'immobilisation et un réducteur qui ne sont pas représentés pour ne pas surcharger la figure.

L'actionneur comprend en outre deux diodes D1 et D2 et un circuit résistif entre la cathode commune de ces deux diodes et le conducteur de neutre. L'anode de la première diode D1 est raccordée à la première borne de phase P1 et l'anode de la deuxième diode D2 est raccordée à la deuxième borne de phase P2. Le circuit résistif comprend deux résistances RA et RC montées en série entre la cathode commune A et le conducteur de neutre. Une seule résistance suffirait dans une variante où la tension aux bornes du condensateur n'est pas mesurée ou est mesurée différemment. La masse électrique GND du circuit électronique est choisie au point commun B des résistances. Si une seule résistance R est utilisée pour constituer le circuit résistif, la masse GND est alors raccordée au conducteur de neutre.

L'unité de commande CPU est alimentée par la tension aux bornes de la résistance RA entre le point A relié à la borne d'alimentation positive VDD et la masse GND reliée à la borne d'alimentation négative VSS. Le détail de l'alimentation, qui comprend des composants abaisseurs et régulateurs de tension, n'est pas représenté sur les figures.

Deux capteurs de courant CS1 et CS2 sont insérés dans le circuit pour détecter un courant circulant dans la première diode D1 et un courant circulant dans la deuxième diode D2. La sortie du premier capteur de courant CS1 est raccordée à une première entrée logique IN1 de l'unité de commande CPU et la sortie du deuxième capteur de courant CS2 est raccordée à une deuxième entrée logique IN2 de l'unité de commande. Chaque capteur de courant fait passer l'entrée correspondante à l'état haut lorsque la diode correspondante conduit. L'unité de commande CPU est ainsi en mesure d'identifier l'état de conduction ou de blocage de chaque diode D1, D2.

Par capteur de courant, il faut entendre tout moyen permettant la détection du passage d'un courant dans une branche dans laquelle le capteur de courant est inséré. Le capteur de courant est préférentiellement un optocoupleur (dont la diode électroluminescente sert de capteur) mais on peut aussi utiliser d'autres dispositifs à semi-conducteurs, par exemple un capteur à effet Hall. De manière équivalente, par capteur de courant il faut entendre ici tout moyen permettant d'identifier la conduction d'une diode. Ainsi, un dispositif permettant de détecter une tension supérieure au seuil de conduction de la diode et capable de transmettre cette information de conduction à une entrée de l'unité de commande CPU est ici un capteur de courant.

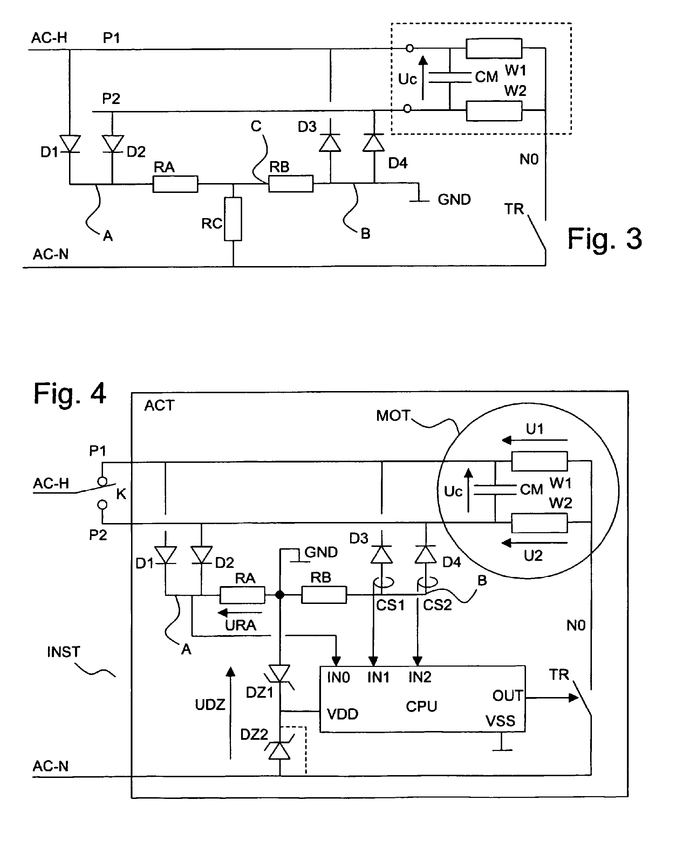

L'actionneur comprend également deux diodes D3 et D4 dont l'anode commune est reliée au point B. La cathode de la troisième diode D3 est reliée à la première borne de phase P1 et la cathode de la quatrième diode D4 est reliée à la deuxième borne de phase P2. Leur rôle sera détaillé plus bas. Dans un mode de réalisation préféré, les capteurs de courant CS1 et CS2 détectent non pas les courants circulant dans les diodes D1 et D2 mais dans les diodes D3 et D4, comme indiqué sur la figure 4.

Une éventuelle information de position est obtenue par un capteur S et transmise sur une troisième entrée IN3 de l'unité de commande CPU, qui dispose par ailleurs d'une sortie logique OUT servant au pilotage de l'interrupteur commandé TR. Cet interrupteur commandé est un relais, un triac ou un autre dispositif à semi-conducteurs.

La figure 2 est un schéma électrique simplifié du premier mode de réalisation du dispositif d'actionneur lorsque l'interrupteur commandé TR est ouvert. Les deux bobinages W1 et W2 du moteur sont alors en série l'un avec l'autre et viennent en parallèle sur le condensateur moteur C. L'ensemble du dipôle équivalent XM est donc soit résistif et inductif, soit résistif et capacitif.

Lorsque le conducteur de phase du secteur est connecté à la première borne de phase P1 et lorsque la tension secteur est positive, la branche de courant comprenant la diode D1 court-circuite la branche de courant comprenant le dipôle équivalent XM et la diode D2. En effet, si on suppose que la diode D2 commence à conduire, la tension UC aux bornes du dipôle équivalent est nécessairement positive, donc la tension UD1 aux bornes de la diode D1 est plus grande que la tension UD2. La tension UD1 étant bornée (typiquement 0.8 V), il en résulte que plus la diode D2 conduit, plus la tension à ses bornes devrait diminuer, ce qui est impossible. La diode D2 est donc bloquée. Autrement dit, quand le conducteur de phase du secteur AC-H est relié à la première borne de phase P1, alors la première diode D1 conduit et la deuxième diode D2 est bloquée tandis que quand le conducteur de phase du secteur AC-H est relié à la deuxième borne de phase P2, la deuxième diode D2 conduit et la première diode est bloquée. La détection de la diode en conduction permet donc, au moins quand l'interrupteur commandé TR est ouvert, d'identifier l'ordre de commande appliqué à l'actionneur.

La figure 3 représente de manière simplifiée un deuxième mode de réalisation du dispositif d'actionneur dans lequel le circuit résistif présente une architecture en T entre les points A et B et le conducteur de neutre. Une résistance RB est maintenant disposée entre le point commun aux résistances RA et RC de la figure 1 et le point B identifiant la cathode commune des diodes D3 et D4.

La figure 4 représente un troisième mode de réalisation du dispositif d'actionneur dans lequel le circuit résistif est également constitué par un T entre les poins A et B et le conducteur de neutre. Une résistance RB est disposée comme précédemment. Par contre, la résistance RC est remplacée par deux diodes Zener DZ1 et DZ2 en opposition. Dans une variante de ce troisième mode de réalisation qui constitue la forme de réalisation préférée de l'invention, une seule diode Zener est utilisée.

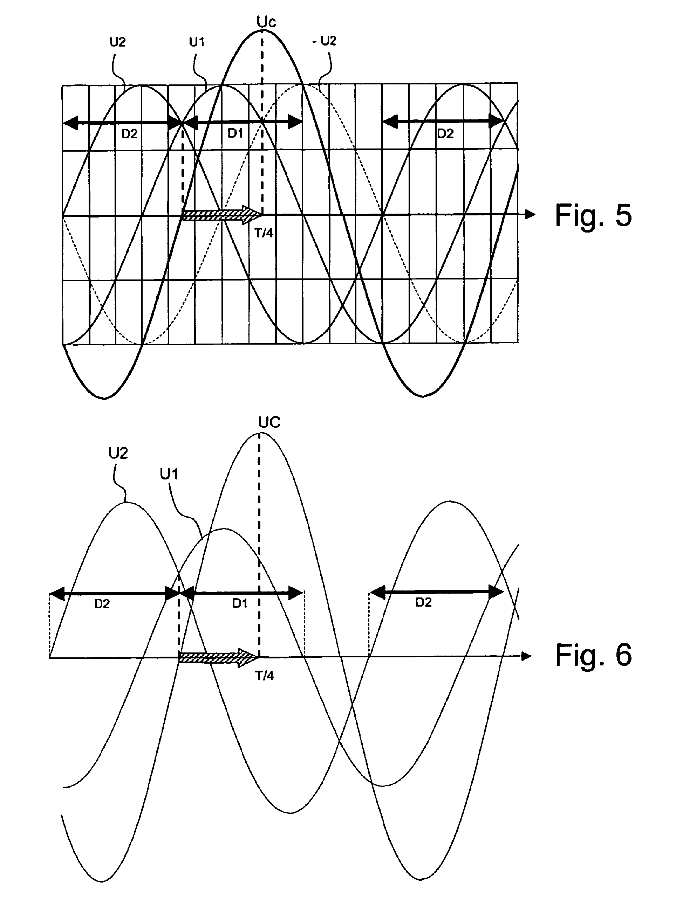

La figure 5 représente un oscillogramme temporel des tensions aux bornes des bobinages du moteur et aux bornes du condensateur moteur CM dans le cas d'une variante du premier mode de réalisation représenté à la figure 1 dans laquelle il n'y a pas de diode D3 et D4 et dans le cas où l'interrupteur de commande K relie le conducteur de phase à la borne de phase P1 et l'interrupteur commandé TR est fermé. Le moteur est donc alimenté : le bobinage W1 est alors principal et le bobinage W2 est alors auxiliaire. Cet oscillogramme correspond à un régime établi dans lequel le moteur est dans des conditions nominales de fonctionnement. Les tensions U1 et U2 aux bornes des deux bobinages sont alors égales en amplitude et déphasées d'un quart de période (90°). La tension auxiliaire U2 est en avance sur la tension principale U1. La tension aux bornes du condensateur UC est donnée par :

$$UC = U1 - U2$$

Sur la figure 5, la tension -U2 est représentée en traits pointillés de manière à permettre une identification facile de la construction de UC. Sont également représentées par des doubles flèches, les périodes de conduction de la première diode D1 et de la deuxième diode D2.

La diode D1 conduit lorsque la tension principale U1 est à la fois positive et supérieure à la tension auxiliaire U2. La diode D2 conduit lorsque la tension auxiliaire U2 est à la fois positive et supérieure à U1. On remarque que la diode D2 conduit ici avant la diode D1 (ou de manière plus précise : que la conduction de la diode D1 suit immédiatement celle de la diode D2). Ce serait l'inverse si l'inverseur K était disposé de manière à établir le contact entre le conducteur de phase AC-H et la deuxième borne de phase P2. On dispose donc également d'un moyen d'identification de la position de l'inverseur K à partir de la séquence de commutation des diodes lorsque l'interrupteur commandé TR est fermé.

Dans tous les cas, la ou les diodes en conduction sont identifiées à l'aide de capteurs de courant CS1 et CS2.

Sur la figure 5, on observe également que lorsqu'il y a commutation de la diode D2 à la diode D1, la tension UC est nulle puisque cet instant de commutation correspond à l'égalité des tensions U1 et U2. Il suffit donc d'attendre une durée d'un quart de période T/4 à partir de cet instant pour mesurer précisément la tension UC au moment où elle est maximum. Ainsi, la combinaison d'un simple signal logique et d'un compteur de temps permet cette mesure, en épargnant donc les besoins d'échantillonnage du microcontrôleur logé dans l'unité de commande CPU.

D'une façon générale, lorsque le moteur est chargé progressivement, sa vitesse diminue et il en est de même pour l'amplitude de la tension auxiliaire et son déphasage par rapport à la tension principale. Ceux-ci sont minimum lorsque le moteur alimenté est bloqué à l'arrêt. Inversement, ils sont maximum quand le moteur tourne à vide.

La figure 6 correspond au cas où le moteur est utilisé à vide. Sur cette figure 6, l'avance de la tension auxiliaire U2 par rapport à la tension principale U1 a augmenté par rapport aux conditions de la figure 5 et l'amplitude de la tension auxiliaire U2 a augmenté de 20%. Cette combinaison d'effets augmente significativement l'amplitude de la tension UC aux bornes du condensateur, qui est donc particulièrement représentative de la vitesse du moteur. De nouveau, il suffit d'attendre une durée d'un quart de période à partir de la commutation des diodes D2 et D1 pour mesurer l'amplitude la tension UC.

La tension UC peut facilement être mesurée à l'aide d'un petit transformateur, mais ce moyen serait coûteux et il est donc préférable d'utiliser le montage complet intégrant les diodes D3 et D4 et de mesurer la tension aux bornes de la résistance RA.

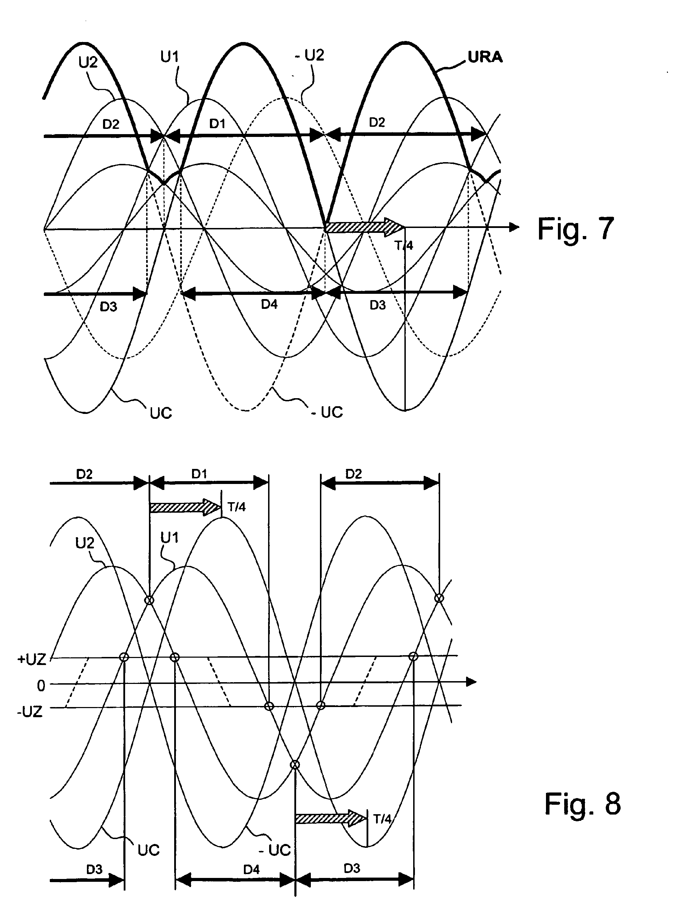

La figure 7 représente un oscillogramme temporel des tensions aux bornes des bobinages du moteur et aux bornes du condensateur moteur CM dans le cas du premier mode de réalisation représenté à la figure 1 et dans le cas où l'interrupteur de commande K relie le conducteur de phase à la borne de phase P1, l'interrupteur commandé TR est fermé et le moteur fonctionne dans ces conditions nominales. La tension URA mesurée aux bornes de la résistance RA est représentée en traits gras.

Il faut noter que si la résistance RC n'était pas présente, la tension aux bornes de la résistance RA serait tout simplement la tension UC aux bornes du condensateur CM redressée en double alternance. Un tel montage permettrait la mesure de l'amplitude de la tension UC mais pas l'identification des séquences de commutation des diodes, la conduction étant alors assurée de manière égale par l'ensemble D1-D4 et par l'ensemble D2-D3.

Les deux résistances RA et RC sont supposées égales. Une période complète fait apparaître plusieurs plages de fonctionnement. On démarre l'analyse à l'instant de commutation instantanée de la diode D2 à la diode D1 (la tension U1 devenant supérieure à U2).

La diode D1 conduisant, le courant dans la résistance RA peut circuler soit simplement dans la résistance RC soit à la fois dans la résistance RC et dans la diode D4 selon la valeur de la tension U2 par rapport à la moitié de la tension U1. On prend l'hypothèse de blocage de D4. Dans ces conditions, la tension URC est moitié de la tension U1 puisque les résistances RA et RC sont ici égales. (Dans un cas quelconque, on prendrait le générateur de Thévenin équivalent à la tension U1 et à l'ensemble des résistances). Tant que cette tension URC est inférieure à la tension U2, la diode D4 ne peut pas conduire. La tension URA vaut donc la moitié de la tension U1 jusqu'au moment où la tension U2 devient inférieure à la moitié de la tension U1. Dès ce moment, la diode D4 devient conductrice. La conduction ayant lieu simultanément par la diode D1 et la diode D4, la tension URA devient égale à la tension UC. Cette situation se poursuit tant que la tension U1 est supérieure à la tension U2. A l'instant où la tension U2 devient supérieure à la tension U1, il y a simultanément commutation des diodes D1, D2, D3 et D4. Les diodes D2 et D3 deviennent passantes tandis que les diodes D1 et D4 deviennent bloquées. La tension URA devient égale à -UC. Cependant, la conduction de la diode D3 n'est assurée que tant que la tension URC à vide (soit la moitié de la tension U2) est supérieure à la tension U1. Dès que cette condition n'est plus remplie, seule la diode D2 conduit et la tension URA est égale à la moitié de la tension U2. Par ailleurs, dès que la tension U1 devient supérieure à la tension U2, la diode D2 se bloque et la diode D1 devient passante.

Il est donc apparent que dans cette variante du premier mode de réalisation, les diodes à considérer pour établir la position de l'interrupteur inverseur K à partir des séquences de commutation sont les diodes D3 et D4 et non pas les diodes D1 et D2. Les commutations de la diode D1 à la diode D2 et de la diode D2 à la diode D1 sont instantanées et la commutation de la diode D4 à la diode D3 est instantanée alors que la commutation de la diode D3 à la diode D4 ne l'est pas. On en conclut que l'inverseur relie le conducteur de phase du secteur à la borne de phase P1 lorsqu'il y a commutation instantanée entre la diode D4 et la diode D3 et relie le conducteur de phase du secteur à la borne de phase P2 lorsqu'il y a commutation instantanée entre la diode D3 et la diode D4.

La détection de la commutation instantanée entre les diodes D4 et D3 sert à déterminer le moment auquel la tension UC est nulle. Elle sert également au déclenchement d'un compteur de temps qui provoque lorsqu'une durée égale au quart de la période de la tension secteur est échue la mesure de la tension UC. On déduit alors aisément de cette mesure l'amplitude de la tension UC et par conséquent la charge à laquelle est soumis le moteur.

Le dispositif selon l'invention se prête à de très nombreuses variantes selon les positions respectives des résistances RA et RC (par exemple la résistance RC peut être située entre l'anode commune de la diode D1 et D2 et le neutre) et selon le choix de la masse électrique. Un montage en T avec une troisième résistance RB peut aussi être utilisé, comme représenté à la figure 3. Les valeurs et dispositions des résistances sont choisies de manière à empêcher un régime de commutations simples se produisant à la fois entre les diodes D1-D2 et entre les diodes D3-D4. Les capteurs CS1 et CS2 sont disposés sur une paire de diodes présentant des périodes de non conduction.

La figure 4 représente une variante très intéressante d'un montage en T : la résistance RC est, au moins partiellement, remplacée par deux diodes Zener DZ1 et DZ2 en opposition dans une première variante, par une seule diode Zener DZ1 dans une deuxième variante. On suppose chaque diode Zener idéale : la tension à ses bornes est nulle quand elle conduit en direct et cette tension vaut UZ quand elle conduit en inverse.

Les oscillogrammes de la figure 8 représentent les tensions U1, U2 et UC dans le cas où deux diodes Zener identiques et deux résistances RA et RB identiques sont utilisées.

Lorsque la diode D1 conduit, le courant circulant à travers la résistance RA:

- soit se divise pour circuler à travers l'ensemble des diodes DZ1 et DZ2 et à travers la diode D4,
- soit circule intégralement à travers l'ensemble des diodes DZ1 et DZ2, lorsque la diode D4 est bloquée,
- soit circule intégralement à travers la diode D4 quand la tension du générateur de Thévenin équivalent aux tensions U1, U2 et aux résistances RA, RB est inférieure à la tension UZ.

La diode D4 est bloquée quand la tension U2 est supérieure à UZ.

Lorsque la diode D4 conduit, le courant circulant à travers la résistance RB:

- soit provient de l'ensemble des diodes DZ1 et DZ2 et depuis la diode D1,
- soit circule intégralement à travers l'ensemble des diodes DZ1 et DZ2, lorsque la diode D1 est bloquée,
- soit circule intégralement à travers la diode D1 quand la tension du générateur de Thévenin équivalent aux tensions U1, U2 et aux résistances RA, RB est inférieure à UZ.

La diode D1 est bloquée quand la tension U1 est inférieure à -UZ.

La tension UDZ aux bornes de l'ensemble des deux diodes Zener vaut -UZ quand la diode Zener DZ1 conduit en inverse et vaut +UZ quand la diode Zener DZ2 conduit en inverse. La tension UDZ aux bornes de l'ensemble des diodes DZ1 et DZ2 est représentée en traits pointillés dans les phases de non-conduction dans les diodes Zener. On remarque en particulier que cette tension UDZ est nulle quand la tension UC est maximum. A cet instant, la tension URA est égale à la moitié de la tension UC : il suffit donc de mesurer la tension URA un quart de période (T/4) après une commutation instantanée entre les diodes D2 et D1 (ou une commutation instantanée entre les diodes D4 et D3) pour avoir accès à l'amplitude de la tension UC aux bornes du condensateur.

Un dispositif selon une deuxième variante du troisième mode de réalisation du dispositif, diffère du dispositif décrit précédemment en ce que la diode Zener DZ2 est replacée par un court circuit (trait pointillé sur la figure 4). Cette fois, la tension UDZ vaut 0 quand la diode Zener DZ1 conduit en direct et -UZ quand elle conduit en inverse. Cette dissymétrie tend à rétrécir les durées de conduction des diodes D3 et D4. L'intérêt principal de cette variante est que les instants de début ou de fin de conduction des diodes D3 et D4 sont maintenant liés aux instants auxquels les tensions U2 ou U1 s'annulent. En particulier, la tension U1 est maximum (amplitude de la tension secteur) un quart de période après la fin de conduction de la diode D3. Dans la plage de conduction de la diode D1, on a URA = U1.

Autrement dit, il est possible avec le montage de la figure 4 sans la diode DZ2 :

- d'identifier l'ordre de commande appliqué grâce à l'interrupteur de commande en analysant les commutations instantanées entre les diodes D4 et D3,
- de mesurer l'amplitude de la tension UC par la mesure de la tension URA un quart de période après une commutation instantanée entre les diodes D4 et D3,
- de mesurer l'amplitude UMAX de la tension secteur par la mesure de la tension URA un quart de période après une fin de conduction de la diode D3 (si l'interrupteur de commande K est en position P1) ou un quart de période après une fin de conduction de la diode D4 (si l'interrupteur de commande K est en position P2),

- de commander l'interrupteur commandé TR (par exemple un triac) en synchronisme avec le secteur quand on désire alimenter le moteur à puissance réduite ou à couple réduit.

Alternativement, les instants de mesure de l'amplitude UMAX peuvent être définis par le début de conduction de la diode D4 (si l'interrupteur de commande K est en position P1), ou par le début de conduction de la diode D3 (si l'interrupteur de commande K est en position P2).

Quelle que soit la méthode, la mesure de l'amplitude UMAX est désignée par « première mesure », sans affecter au terme « première » une connotation temporelle.

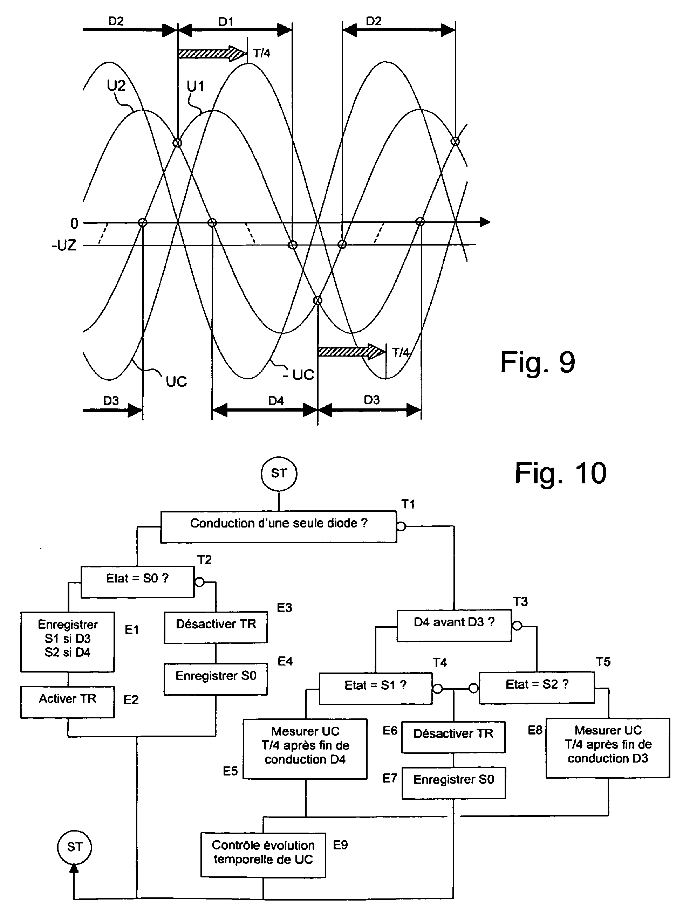

La tension aux bornes de la résistance RB référencée par rapport à la masse GND est égale à +U1 (si on néglige la valeur de la tension UDZ provoquée par la conduction inverse de DZ1), lorsque la diode D3 conduit. Quand la diode D2 conduit également, la tension aux bornes de l'ensemble série des résistances RB et RA est égale à - UC. Dans ces conditions, la mesure de la tension URA donne donc une valeur égale à la différence instantanée (U1 - UC) pendant tout l'intervalle de temps où il y a conduction simultanée des diodes D2 et D3 (partie droite de la figure 9). Une mesure effectuée un quart de période après l'instant de début de conduction de D3 donne la valeur de l'amplitude de la tension UC diminuée de la valeur de la tension U1, soit à cet instant 0.707 fois la tension UMAX, puisque sin(T/4) = 0.707. En effet, U1 est alors négatif, valant 0.707UMAX, tandis que -UC est positif et maximum.

On désigne cette mesure par « deuxième mesure », sans affecter au terme « deuxième » une connotation temporelle.

On peut donc déterminer précisément l'amplitude de la tension UC par le calcul à partir de la deuxième mesure, en exploitant le résultat première mesure. On peut aussi utiliser uniquement le résultat de la deuxième mesure, qui contient une information combinée sur les tensions, puisqu'on s'intéresse essentiellement aux variations de l'amplitude de la tension UC. Si la tension du secteur reste constante, la dynamique de mesure sera de plus meilleure que dans le cas d'une mesure qui porterait sur la totalité de l'amplitude de la tension UC. Si la tension du secteur varie, ces variations affectent aussi bien les deux composantes de cette tension composite mesurée aux bornes de la résistance RA. La précision de mesure indirecte de couple est donc excellente.

Il est donc possible de procéder uniquement à la deuxième mesure sans procéder à la première mesure.

On remarque sur la figure 4 que la masse électrique GND est placée au point commun des résistances RA et RB. La borne négative VSS de l'unité de commande CPU est raccordée à la masse GND, tandis que la borne positive VDD est raccordée à la cathode de la diode Zener DZ1. L'entrée analogique IN0 permet la me-sure de la tension URA. Les entrées logiques IN1 et IN2 sont raccordées aux capteurs de courant CS1 et CS2 informant de l'état de conduction des diodes D3 et D4. L'unité de commande CPU comprend par exemple un microcontrôleur en boîtier à 8 broches seulement.

La figure 10 décrit à la fois un premier mode d'exécution du procédé d'identification de l'ordre de commande, c'est-à-dire de la position de l'interrupteur de commande K, et du procédé de mesure de la tension du condensateur moteur CM. On suppose le mode d'exécution du procédé est décrit dans l'hypothèse de la figure 4 dans laquelle c'est la commutation instantanée des diodes D3 et D4 qui sert à identifier la position de l'interrupteur de commande K.

Le procédé débute au repère ST. On suppose que l'actionneur est dans un état de repos S0. Une mémoire interne permet de mémoriser l'état courant de l'actionneur. Dans une première étape T1, on teste si une seule des deux diodes D3 et D4 est activée par période.

Si tel est le cas, on passe à une étape T2 où l'on teste si l'état présent de l'actionneur est l'état de repos S0. Si tel est le cas, on passe aux étapes E1 et E2 dans lesquelles on enregistre en mémoire un nouvel état S1 correspondant à la rotation du moteur dans le premier sens ou un nouvel état S2 correspondant à la rotation du moteur dans le deuxième sens, selon qu'il a été détecté une conduction de la diode D3 ou de la diode D4, puis on ferme l'interrupteur commandé TR. Si tel n'est pas le cas, il existe un dysfonctionnement, on ouvre l'interrupteur commandé TR dans une étape E3, puis on enregistre en mémoire l'état de repos S0 de l'actionneur, dans une étape E4. Alternativement, on peut enregistrer en mémoire un état SA de détection d'anomalie. Après les étapes E2 ou E4 le procédé boucle sur le repère ST.

Si lors du test T1, on détecte que les deux diodes D3 et D4 sont activées par période, on passe à une étape de test T3 qui permet de déterminer la séquence de commutation instantanée entre les diodes D3 et D4. Si la commutation instantanée a lieu de la diode D3 à la diode D4, on passe à une étape T5. Si elle a lieu de la diode D4 à la diode D3 (comme sur la figure 9), on passe à une étape T4. Dans ces étapes de test T4 et T5, on s'assure que la commutation détectée est cohérente avec l'état enregistré en mémoire. Si tel n'est pas le cas, on ouvre l'interrupteur commandé TR dans une étape E6, puis on enregistre en mémoire l'état de repos S0 de l'actionneur dans une étape E7. Ce cas correspond en effet à un changement brutal de la position de l'interrupteur de commande K1 par rapport à la situation précédente. Il faut par conséquent arrêter l'actionneur pour éviter les à-coups dans la chaîne cinématique d'entraînement de la charge.

Si, à l'étape T4, la commutation détectée est cohérente avec l'état enregistré en mémoire, on passe à l'étape E5 dans laquelle on déclenche, à la fin de la conduction de la diode D4 (ou de manière équivalente au début de la conduction de la diode D3), une temporisation d'un quart de période secteur au bout de laquelle la tension UC est échantillonnée, par exemple à partir d'une mesure de la tension URA. De même, si à l'issue de l'étape T5, la commutation détectée est cohérente avec l'état enregistré en mémoire, on passe à l'étape E8 dans laquelle on déclenche, à la fin de la conduction de la diode D3 (ou de manière équivalente au début de la conduction de la diode D4), une temporisation d'un quart de période secteur au bout de laquelle la tension UC est échantillonnée.

On passe ensuite à une étape E9 de contrôle de l'évolution temporelle de la tension UC. Cette étape provoque éventuellement la désactivation de l'interrupteur commandé TR si une variation anormale de vitesse est détectée au travers des variations de la tension UC.

Le procédé boucle ensuite sur le repère ST.

Les étapes E5, E8 et E9 correspondent plus spécifiquement au procédé de mesure de la tension condensateur UC, tandis que les autres étapes décrivent le procédé d'identification de la commande et d'adaptation de l'état de l'actionneur à cette commande.

Le procédé est susceptible de nombreuses variantes, notamment dans le cas où la topologie du circuit conduit à utiliser les diodes D1 et D2 pour identifier l'état de l'actionneur.

Entre les étapes de test T1 et T2, il est aussi possible d'intercaler une étape de test intermédiaire visant à détecter une conduction simultanée des diodes D3 et D4. En effet, un appui simultané sur deux touches de commande reliant les bornes de phase P1 et P2 au conducteur de phase AC-H du secteur peut constituer un ordre de commande particulier ou un ordre de programmation.

Enfin, une variante du procédé sert également à mesurer l'amplitude de la tension secteur, en mesurant la tension URA un quart de période après la fin de conduction de la diode D3 (si l'interrupteur de commande K est en position P1) ou un quart de période après la fin de conduction de la diode D4 (si l'interrupteur de commande K est en position P2) dans le cas de la deuxième variante du troisième mode de réalisation. Cette variante se déduit simplement de ce qui a été vu plus haut. La connaissance de la tension secteur permet de compenser des variations de cette tension, lesquelles se répercutent sur la tension UC et ne doivent pas être interprétées comme des variations de couple.

Ainsi, le bloc E9 de contrôle d'évolution temporelle de UC utilise préférentiellement une variable réduite égale au rapport des deux tensions UC / Usecteur : cette variable réduite est insensible aux variations de la tension secteur.

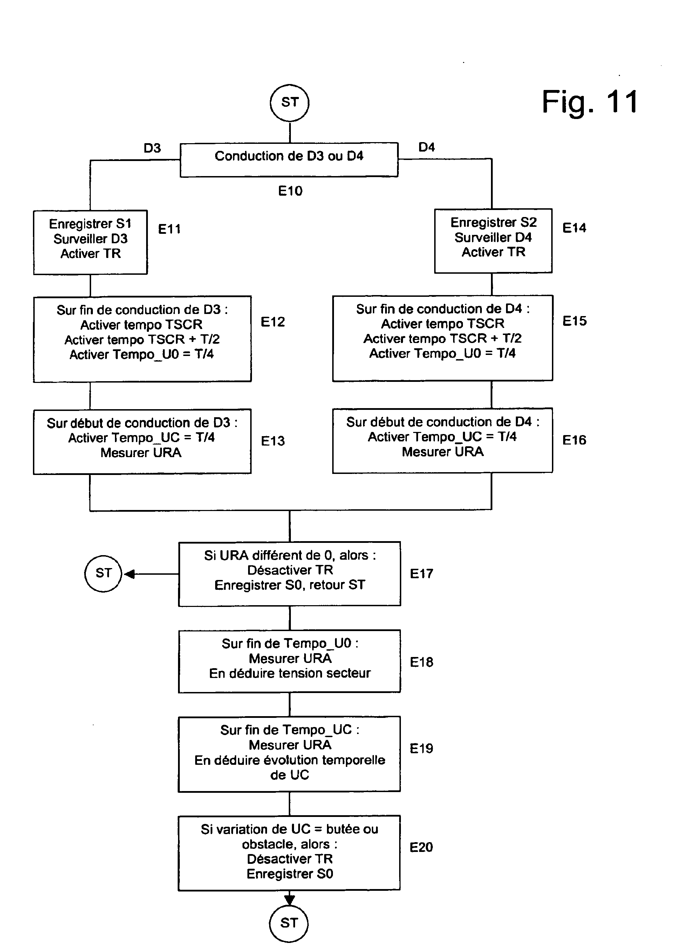

Un deuxième mode d'exécution du procédé est décrit à la figure 11. Ce mode est plus simple que le précédent dans la mesure où seule la conduction d'une diode est analysée une fois le sens initial de la commande déterminé. Le procédé fait référence en particulier aux figures 4 et 9.

Le procédé démarre au repère ST. On suppose l'actionneur initialement au repos (état S0). Une première étape de test E10 permet de déterminer si l'une des diodes (D3, D4) conduit. Tant qu'aucune diode ne conduit, le procédé boucle sur cette étape de test. Si c'est la diode D3 qui conduit, alors on passe à l'étape E11 dans laquelle on enregistre l'état S1, correspondant à la rotation du moteur dans le premier sens DIR1. Le procédé se focalise alors sur la surveillance de la diode D3, par exemple en autorisant des interruptions de l'unité de commande par front montant ou descendant du signal sur l'entrée IN1.

On active l'interrupteur commandé TR et, de ce fait, la diode D4 devient également conductrice en plus de la diode D3, comme représenté en figure 9 si les conditions de charge sont nominales.

Dès qu'apparaît une fin de conduction de la diode D3, on passe à une étape E12 qui a pour effet d'activer une éventuelle temporisation TSCR. En effet, comme il a été vu, la fin de conduction de la diode D3 sert de signal de synchronisation secteur pour éventuellement activer un fonctionnement à découpage partiel de l'onde secteur par l'interrupteur commandé TR. Si celui-ci est de type Triac, il est avantageux de provoquer un premier amorçage temporisé par la temporisation TSCR et un deuxième amorçage décalé d'une demi-période T/2 (10 ms en 50 Hz). Une deuxième temporisation TSCR + T/2 est donc également activée. Le détail de la commande du triac est connu de l'homme du métier et n'est par conséquent pas davantage précisé ici.

Dans l'étape E12, cet instant de fin de conduction de la diode D3 sert également à activer une première temporisation de mesure, notée Tempo_U0, de durée égale au quart de la période T/4 de la tension secteur (5 ms en 50 Hz).

Quand plus tard la diode D3 commence à conduire, il s'agit nécessairement d'une commutation naturelle avec la diode D4 qui cesse de conduire (commutation instantanée). On passe alors par le front de début de conduction de la diode D3 à l'étape E13 dans laquelle est activée une deuxième temporisation de mesure, notée Tempo_UC, de durée égale au quart de la période T/4 de la tension secteur (5 ms en 50 Hz).

A cette étape E13, on mesure également la tension URA. En effet, cette tension URA est normalement nulle au moment où D3 commence à conduire. Si tel n'est pas le cas, c'est qu'une manoeuvre de l'interrupteur inverseur K vient de se produire, et il faut immédiatement arrêter le moteur en ouvrant l'interrupteur commandé TR. Ce test sur la tension URA et l'action correspondante sont effectués à l'étape E17. En cas de désactivation de l'interrupteur commandé TR et de retour à l'état de repos, on enregistre l'état de l'actionneur en mémoire et le procédé boucle sur le repère ST. Sinon, on passe à une étape E18 avec la fin de la première temporisation de mesure Tempo_U0. A cet instant, une nouvelle mesure de la tension URA est réalisée. Cette mesure donne une valeur permettant de déterminer l'amplitude de la tension secteur. Cette valeur est enregistrée de manière à être utilisée à l'étape E19.

On passe ensuite à une étape E19, avec la fin de la deuxième temporisation de mesure Tempo_UC. A cet instant, une nouvelle mesure de la tension URA est réalisée. Cette mesure renseigne sur l'amplitude de la tension UC. Elle permet donc d'analyser les éventuelles variations de l'amplitude de la tension UC. La valeur de la tension UC est corrigée en fonction des éventuelles variations de la tension secteur (comme expliqué précédemment).

A une étape E20, les variations temporelles de la tension UC sont analysées, en valeur absolue ou relative ou selon toute méthode déjà connue de l'homme du métier, pour déterminer la présence d'une butée ou d'un obstacle éventuel. Par exemple, une forte décroissance de la tension UC est provoquée par une butée. Dans ce cas, l'interrupteur commandé TR est désactivé de manière permanente et l'actionneur repasse à l'état de repos S0.

Les étapes E14-E16 sont provoquées par la conduction de la diode D4 lors de l'étape E10. Elles sont similaires aux étapes E11-E13 à ceci près que c'est l'état S2 qui est activé et que c'est maintenant la conduction de la diode D4 qui va être utilisée pour déterminer les instants où des actions doivent être entreprises.

Les procédés décrits s'appliquent de la même façon lorsque l'interrupteur commandé est fermé à intervalles réguliers en synchronisme avec la tension du réseau alternatif, par exemple avec un angle de phase de 90° de manière à obtenir une tension réduite. Selon la valeur de cet angle d'ouverture, on pourra avoir intérêt à modifier les instants de mesure. Par exemple, la mesure donnant l'information utile sur la tension composite UC-U1 peut être directement obtenue à l'instant de commutation entre les diodes D4 et D3, lorsque l'angle de phase est égal à 90°.

L'invention peut aussi s'appliquer dans le cas où l'ordre de commande n'a pas à être identifié si sa nature est connue par d'autres moyens que ceux décrits. Dans ce cas, les moyens de l'invention restent utiles pour la mesure simple des variations du couple moteur.

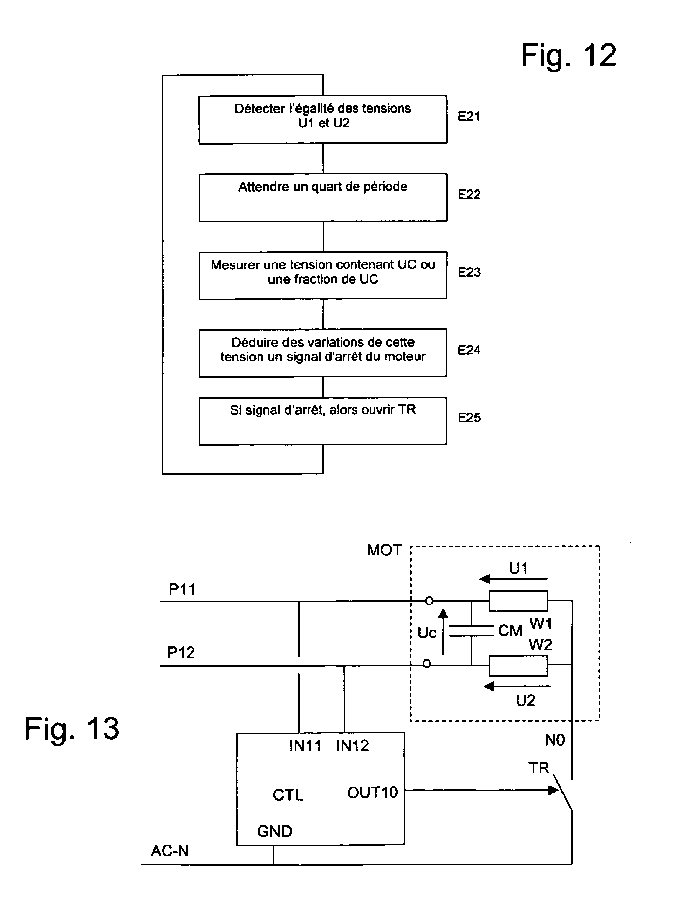

Enfin, l'homme du métier pourra aisément adapter l'invention à tout dispositif permettant d'identifier de manière certaine une commutation par égalité des tensions U1 et U2, par exemple à l'aide de comparateurs. Le procédé de mesure des variations de couple selon l'invention est résumé par la figure 12.

Le procédé comprend une première étape de détection de cette égalité E21, puis une étape de temporisation E22 de durée égale à un quart de période et une étape de mesure de tension E23 intervenant donc un quart de période après cette détection. L'étape de mesure concerne une tension composite comprenant tout ou partie de la tension UC aux bornes du condensateur moteur.

Dans une étape de traitement E24, les variations de la tension composite sont analysées pour déduire la présence d'un signal d'arrêt. Si un tel signal d'arrêt est présent, alors une étape de commande E25 provoque l'ouverture de l'interrupteur commandé TR, et le moteur cesse d'être alimenté.

La figure 13 représente un dispositif simplifié dans lequel est inséré le moteur, alimenté par deux conducteurs de phase P11 et P12 dont l'un ou l'autre sera raccordé à la phase du réseau commercial d'alimentation par un moyen quelconque non représenté. Le moteur comprend comme précédemment un premier bobinage W1 et un deuxième bobinage W2 présentant un point commun N0, chaque extrémité non commune étant reliée à une borne du condensateur moteur CM et à l'un des conducteurs de phase.

Une unité de contrôle CTL est raccordée par une première entrée IN11 au premier conducteur de phase P11 et par une deuxième entrée IN12 au deuxième conducteur de phase P12, et par une borne de masse GND au conducteur de neutre AC-N, qui est lui-même raccordé au point commun N0 par l'interrupteur commandé TR. Cette unité de contrôle permet non seulement la mesure d'une tension simple, entre l'une des entrées et la masse, mais aussi celle d'une tension composée, par exemple la tension différentielle entre les deux entrées, donc ici la tension UC. La sortie OUT10 permet la commande de l'interrupteur commandé TR.

**Revendications**

1. Procédé de fonctionnement d'un actionneur (ACT) destiné à être relié à un conducteur de phase (AC-H) et à un conducteur de neutre (AC-N) d'une source de tension alternative, l'actionneur comprenant :

- un moteur (MOT) à induction monophasé muni de deux bobinages (W1, W2) reliés par une extrémité (N0),
- un condensateur permanent (CM) disposé entre chacune des autres extrémités des bobinages et dont les bornes constituent une première borne de phase (P1) et une deuxième borne de phase (P2), le conducteur de phase étant raccordé à la première borne de phase pour commander la rotation du moteur dans un premier sens (DIR1) et à la deuxième borne de phase pour commander la rotation du moteur dans un deuxième sens (DIR2),
- un interrupteur commandé (TR) par une unité électronique de commande (CPU) pour relier l'extrémité commune (N0) des bobinages au conducteur de neutre,
- au moins une paire de diodes (D1, D2, D3, D4), les diodes d'une même paire étant raccordées par une électrode de même nature à un circuit au moins résistif (RA, RC ; RA, RB, RC ; RA, RB, RC, DZ1, DZ2) raccordé au conducteur de neutre, l'autre électrode de chaque diode étant reliée respectivement à la première borne de phase et à la deuxième borne de phase et

- des moyens (CS1, CS2) de détection de l'état de conduction de chacune des deux diodes reliés à l'unité électronique de commande,

le procédé comprenant une étape d'analyse de l'état de conduction des diodes pour déterminer l'état de l'actionneur et/ou la nature d'un ordre de commande et/ou l'amplitude de la tension de la source et/ou l'amplitude de la tension du condensateur permanent et/ou un signal de pilotage de l'interrupteur commandé.

2. Procédé de fonctionnement selon la revendication précédente, **caractérisé en ce que** l'étape d'analyse de l'état de conduction des diodes permet de déterminer si le conducteur de phase est relié à la première borne de phase ou à la deuxième borne de phase.

3. Procédé de fonctionnement selon l'une des revendications précédentes, **caractérisé en ce qu'**il comprend une étape de mesure directe ou indirecte de la tension (UC) aux bornes du condensateur permanent intervenant sensiblement un quart de période de la tension de la source après une commutation instantanée entre deux diodes.

4. Procédé de fonctionnement selon la revendication précédente **caractérisé en ce que** l'interrupteur commandé est désactivé si une étape de mesure directe ou indirecte de la tension aux bornes du condensateur intervenant après une commutation instantanée entre deux diodes donne un résultat sensiblement non nul.

5. Procédé de fonctionnement selon l'une des revendications précédentes, **caractérisé en ce qu'**il comprend une étape de mesure de la tension de la source de tension intervenant sensiblement un quart de période de la tension de la source après la fin de la conduction d'une diode sans qu'il y ait commutation avec une seconde diode.

6. Procédé de fonctionnement selon l'une des revendications précédentes, **caractérisé en ce que** les mesures de tension sont effectuées aux bornes d'un même élément (RA) du circuit au moins résistif.

7. Procédé de fonctionnement selon l'une des revendications précédentes, **caractérisé en ce que** l'interrupteur commandé est actionné en synchronisme avec la source de tension, le signal de synchronisation étant déterminé par une fin de conduction d'une première diode, sans commutation instantanée avec une deuxième diode.

8. Actionneur (ACT) destiné à être relié à un conducteur de phase (AC-H) et à un conducteur de neutre (AC-N) d'une source de tension alternative et comprenant :

- un moteur (MOT) à induction monophasé muni de deux bobinages (W1, W2) reliés par une extrémité (N0),
- un condensateur permanent (CM) disposé entre chacune des autres extrémités des bobinages et dont les bornes constituent une première borne de phase (P1) et une deuxième borne de phase (P2), le conducteur de phase étant raccordé à la première borne de phase pour commander la rotation du moteur dans un premier sens (DIR1) et à la deuxième borne de phase pour commander la rotation du moteur dans un deuxième sens (DIR 2),

**caractérisé en ce qu'**il comprend :

- un interrupteur commandé (TR) par une unité électronique de commande (CPU) pour relier l'extrémité commune des bobinages au conducteur de neutre,
- au moins une paire de diodes (D1, D2 ; D3, D4), les diodes d'une même paire étant raccordées par une électrode de même nature à un circuit au moins résistif (RA, RC ; RA, RB, RC ; RA, RB, RC, DZ1, DZ2) raccordé au conducteur de neutre, l'autre électrode de chaque diode étant reliée respectivement à la première borne de phase et à la deuxième borne de phase et
- des moyens (CS1, CS2) de détection de l'état de conduction de chacune des deux diodes reliés à l'unité électronique de commande.

9. Actionneur selon la revendication précédente, **caractérisé en ce qu'**il comprend deux autres diodes formant un montage redresseur en pont dont les bornes d'entrée sont reliées aux bornes du condensateur et dont les bornes de sortie alimentent au moins une première résistance (RA) disposée entre les anodes communes et les cathodes communes des diodes et **en ce qu'**il présente au moins une branche électrique (RC ; DZ1, DZ2) disposée entre l'une des extrémités de la première résistance et le conducteur de neutre.

10. Actionneur selon la revendication précédente, **caractérisé en ce qu'**il comprend un moyen (CPU, IN0) de mesure de la tension aux bornes de la première résistance.

11. Actionneur selon la revendication précédente, **caractérisé en ce que** la branche électrique comprend une diode Zener (DZ1, DZ2).

12. Actionneur selon la revendication précédente, **caractérisé en ce que** les bornes d'alimentation de l'unité électronique de commande sont reliées aux bornes de la diode Zener (DZ1).

13. Actionneur selon l'une des revendications 8 à 12, **caractérisé en ce que** l'unité électronique de commande présente des moyens logiciels pour la mise en oeuvre du procédé selon l'une des revendications 1 à 7.

14. Procédé de mesure indirecte des variations de couple d'un moteur à induction comportant un bobinage principal, un bobinage auxiliaire et un condensateur moteur, dans un actionneur pour l'entraînement d'une charge dans une installation domotique, **caractérisé en ce qu'**il comporte une étape de détection de l'instant où les tensions aux bornes du bobinage principal et du bobinage auxiliaire sont égales et une étape de mesure d'une tension comprenant au moins la tension aux bornes du condensateur moteur un quart de période après l'étape de détection.

15. Actionneur comprenant des moyens matériels (CPU, IN1, IN2 ; CTL, IN1, IN2) et logiciels pour mettre en oeuvre le procédé de la revendication 14.

**Claims**

1. A method of operating an actuator (ACT) intended to be linked to a phase conductor (AC-H) and a neutral conductor (AC-N) of an alternating current voltage source, the actuator comprising:

   - a single-phase induction motor (MOT) provided with two windings (W1, W2) linked by one end (N0),
   - a permanent capacitor (CM) disposed between each of the other ends of the windings, and the terminals of which form a first phase terminal (P1) and a second phase terminal (P2), the phase conductor being connected to the first phase terminal to control the rotation of the motor in a first direction (DIR1) and to the second phase terminal to control the rotation of the motor in a second direction (DIR2),
   - a switch (TR) controlled by an electronic control unit (CPU) to link the common end (N0) of the windings to the neutral conductor,
   - at least one pair of diodes (D1, D2, D3, D4), the diodes of one and the same pair being connected by an electrode of the same type to a circuit that is at least resistive (RA, RC; RA, RB, RC; RA, RB, RC, DZ1, DZ2) connected to the neutral conductor, the other electrode of each diode being respectively linked to the first phase terminal and to the second phase terminal, and
   - means (CS1, CS2) of detecting the state of conduction of each of the two diodes linked to the electronic control unit,

the method including a step for analyzing the state of conduction of the diodes to determine the state of the actuator and/or the nature of a control command and/or the amplitude of the voltage from the source and/or the amplitude of the voltage from the permanent capacitor and/or a signal driving the controlled switch.

2. The operating method as claimed in the preceding claim, wherein the step for analyzing the state of conduction of the diodes is used to determine whether the phase conductor is linked to the first phase terminal or to the second phase terminal.

3. The operating method as claimed in one of the preceding claims, which comprises a step for measuring directly or indirectly the voltage (UC) at the terminals of the permanent capacitor involving roughly a quarter period of the source voltage after an instantaneous switching between two diodes.

4. The operating method as claimed in the preceding claim, wherein the controlled switch is deactivated if a step for directly or indirectly measuring the voltage at the terminals of the capacitor occurring after an instantaneous switching between two diodes gives a substantially non-zero result.

5. The operating method as claimed in one of the preceding claims, which includes a step for measuring the voltage of the voltage source occurring roughly a quarter period of the source voltage after the end of the conduction of a diode without there being any switching with a second diode.

6. The operating method as claimed in one of the preceding claims, wherein the voltage measurements are performed at the terminals of one and the same element (RA) of the at least resistive circuit.

7. The operating method as claimed in one of the preceding claims, wherein the controlled switch is actuated in synchronism with the voltage source, the synchronization signal being determined by an end of conduction of a first diode, without instantaneous switching with a second diode.

8. An actuator (ACT) intended to be linked to a phase conductor (AC-H) and to a neutral conductor (AC-N) of an alternating current voltage source, and comprising:

   - a single-phase induction motor (MOT) provided with two windings (W1, W2) linked by one end (N0),
   - a permanent capacitor (CM) disposed between each of the other ends of the windings and the terminals of which form a first phase terminal (P1) and a second phase terminal (P2), the phase conductor being connected to the first phase terminal to control the rotation of the motor in a first direction (DIR1) and to the second phase terminal to control the rotation of the motor in a second direction (DIR2),

wherein it comprises:

- a switch (TR) controlled by an electronic control unit (CPU) to link the common end of the windings to the neutral conductor,
- at least one pair of diodes (D1, D2; D3, D4), the diodes of one and the same pair being connected by an electrode of the same type to a circuit that is at least resistive (RA, RC; RA, RB, RC; RA, RB, RC, DZ1, DZ2) connected to the neutral conductor, the other electrode of each diode being respectively linked to the first phase terminal and to the second phase terminal, and
- means (CS1, CS2) of detecting the state of conduction of each of the two diodes linked to the electronic control unit.

9. The actuator as claimed in the preceding claim, wherein it includes two other diodes forming a rectifier bridge assembly, the input terminals of which are linked to the capacitor terminals and the output terminals of which power at least one first resistor (RA) disposed between the common anodes and the common cathodes of the diodes and which presents at least one electrical branch (RC; DZ1, DZ2) disposed between one of the ends of the first resistor and the neutral conductor.

10. The actuator as claimed in the preceding claim, wherein it includes a means (CPU, IN0) of measuring the voltage at the terminals of the first resistor.

11. The actuator as claimed in the preceding claim, wherein the electrical branch includes a Zener diode (DZ1, DZ2).

12. The actuator as claimed in the preceding claim, wherein the power supply terminals of the electronic control unit are linked to the terminals of the Zener diode (DZ1).

13. The actuator as claimed in one of claims 8 to 12, wherein the electronic control unit presents software means for implementing the method as claimed in one of claims 1 to 7.

14. A method for measuring the torque variations of an induction motor comprising a main winding (W1), an auxiliary winding (W2) and a motor capacitor (CM), in an actuator for driving a load in a home automation installation, **characterized in that** it comprises a step of detecting of the instant when main winding terminal voltage and the auxiliary winding terminal voltage are equal and a step of measuring a voltage including at least the motor capacitor terminal voltage a quarter of period after the step of detecting.

15. An actuator including hardware means (CPU, IN1, IN2; CTL, IN1, IN2) and software means for the implementation of the method of claim 14.

**Patentansprüche**

1. Verfahren zum Betrieb einer Betätigungsvorrichtung (ACT), die dazu bestimmt ist, an einen Phasenleiter (AC-H) und an einen Nulleiter (AC-N) einer Wechselspannungsquelle angeschlossen zu werden, und welche folgende Bauteile umfasst:

- Einen einphasigen Induktionsmotor (MOT) mit zwei Wicklungen (W1, W2), die an einem Ende (N0) verbunden sind,
- einen permanenten Kondensator (CM), der zwischen die anderen Enden der Wicklungen geschaltet ist und deren Klemmen eine erste Phasenklemme (P1) und eine zweite Phasenklemme (P2) darstellen, wobei der Phasenleiter zur Steuerung der Motordrehung im einen Sinne (DIR1) an die erste Phasenklemme und zur Steuerung der Motordrehung im anderen Sinne (DIR2) an die zweite Phasenklemme angeschlossen wird,
- einen von einer elektronische Steuereinheit (CPU) gesteuerten Schalter (TR), um das gemeinsame Ende (N0) der Wicklungen mit dem Nulleiter zu verbinden,
- wenigstens ein Paar Dioden (D1, D2, D3, D4), wobei die Dioden ein und desselben Paares durch eine Elektrode derselben Art an eine wenigstens Widerstände aufweisende Schaltung (RA, RC; RA, RB, RC; RA, RB, RC, DZ1, DZ2) angeschlossen sind, die ihrerseits mit dem Nulleiter verbunden ist, während die andere Elektrode jeder Diode an die erste Phasenklemme bzw. an die zweite Phasenklemme angeschlossen ist, und
- Mittel (CS1, CS2) zum Erfassen des Leitungszustands jeder der beiden an die elektronische Steuereinheit angeschlossenen Dioden;

das Verfahren umfasst einen Schritt der Analyse des Leitungszustands der Dioden, um den Zustand der Betätigungsvorrichtung und/oder die Art eines Steuerbefehls und/oder die Amplitude der Spannungsquelle und/oder die Amplitude der Kondensatorspannung und/oder ein Signal zur Steuerung des gesteuerten Schalters zu bestimmen.

2. Verfahren nach dem vorangehenden Anspruch, **dadurch gekennzeichnet, dass** der Schritt der Analyse des Leitungszustands der Dioden zu bestimmen erlaubt, ob der Phasenleiter mit der ersten oder der zweite Phasenklemme verbunden ist.

3. Verfahren nach einem der vorangehenden Ansprüche, **dadurch gekennzeichnet, dass** es einen Schritt der direkten oder indirekten Messung der Spannung (UC) an den Klemmen des permanenten Kondensators aufweist, wobei diese Messung im wesentlichen dann stattfindet, wenn nach der momentanen Umschaltung zwischen zwei Dioden eine Viertelperiode der Quellenspannung verstrichen ist.

4. Verfahren nach dem vorangehenden Anspruch, **dadurch gekennzeichnet, dass** der gesteuerte Schalter desaktiviert wird, wenn ein Schritt der direkten oder indirekten Spannungsmessung an den Klemmen des Kondensators, welche nach einer momentanen Umschaltung zwischen zwei Dioden stattfindet, ein im wesentlichen von null verschiedenes Resultat ergibt.

5. Verfahren nach einem der vorangehenden Ansprüche, **dadurch gekennzeichnet, dass** es eine Schritt der Messung der Spannung der Spannungsquelle aufweist, wobei diese Messung im wesentlichen dann stattfindet, wenn nach dem Ende der Leitung einer Diode eine Viertelperiode der Quellenspannung verstrichen ist, ohne dass eine Umschaltung mit einer zweiten Diode erfolgt.

6. Verfahren nach einem der vorangehenden Ansprüche, **dadurch gekennzeichnet, dass** die Spannungsmessungen an den Klemmen ein und desselben Elements (RA) der wenigstens Widerstände aufweisenden Schaltung erfolgen.

7. Verfahren nach einem der vorangehenden Ansprüche, **dadurch gekennzeichnet, dass** der gesteuert Schalter synchron mit der Spannungsquelle betätigt wird, wobei das Synchronisierungssignal durch das Ende der Leitung einer ersten Diode, ohne Umschaltung einer zweiten Diode, bestimmt wird.

8. Betätigungsvorrichtung (ACT), die dazu bestimmt ist, an einen Phasenleiter (AC-H) und an einen Nulleiter (AC-N) einer Wechselspannungsquelle angeschlossen zu werden, und welche folgende Bauteile umfasst:

   - Einen einphasigen Induktionsmotor (MOT), der mit zwei Wicklungen (W1, W2) ausgerüstet ist, die an einem Ende (NO) verbunden sind,
   - einen permanenten Kondensator (CM), der zwischen die anderen Enden der Wicklungen geschaltet ist und dessen Klemmen eine erste Phasenklemme (P1) und eine zweite Phasenklemme (P2) darstellen, wobei der Phasenleiter zur Steuerung der Motordrehung in einem ersten Sinn (DIR1) an die erste Phasenklemme und zur Steuerung der Motordrehung im anderen Sinne (DIR2) an die zweite Phasenklemme angeschlossen ist,

**dadurch gekennzeichnet, dass** sie folgende Bauteile umfasst:

   - einen von einer elektronischen Steuereinheit (CPU) gesteuerten Schalter (TR), um das gemeinsame Ende der Wicklungen an den Nulleiter anzuschliessen,
   - wenigstens ein Paar Dioden (D1, D2; D3, D4), wobei die Dioden ein und desselben Paars durch eine Elektrode derselben Art mit einer wenigstens Widerstände (RA, RC; RA, RB, RC; RA, RB, RC, DZ1, DZ2) aufweisenden Schaltung verbunden sind, die ihrerseits an den Nullleiter angeschlossen ist, während die andere Elektrode jeder Diode an die erste Phasenklemme bzw. die zweite Phasenklemme angeschlossen ist, und
   - Mittel (CS1, CS2) zum Erfassen des Leitungszustands jeder der beiden an die elektronische Steuerschaltung angeschlossenen Dioden.

9. Betätigungsvorrichtung nach dem vorangehenden Anspruch, **dadurch gekennzeichnet, dass** sie zwei weitere Dioden aufweist, die eine Gleichrichterbrücke bilden, deren Eingangsklemmen mit den Klemmen des Kondensators verbunden sind und deren Ausgangsklemmen wenigstens einen ersten Widerstand (RA) speisen, der zwischen den gemeinsamen Anoden und den gemeinsamen Kathoden der Dioden angeordnet ist, und dass sie wenigstens einen elektrischen Zweig (RC; DZ1, DZ2) aufweist, der zwischen einem der Enden des ersten Widerstands und dem Nulleiter angeordnet ist.

10. Betätigungsvorrichtung nach dem vorangehenden Anspruch, **dadurch gekennzeichnet, dass** sie ein Mittel (CPU, IN0) zum Messen der Spannung an den Klemmen des ersten Widerstands aufweist.

11. Betätigungsvorrichtung nach dem vorangehenden Anspruch, **dadurch gekennzeichnet, dass** der elektrische Zweig eine Zener-Diode (DZ1, DZ2) aufweist.

12. Betätigungsvorrichtung nach dem vorangehenden Anspruch, **dadurch gekennzeichnet, dass** die Speiseklemmen der elektronischen Steuereinheit an die Klemmen der Zener-Diode (DZ1) angeschlossen sind.

**13.** Betätigungsvorrichtung nach einem der Ansprüche 8 bis 12, **dadurch gekennzeichnet, dass** die elektronische Steuereinheit Software-Mittel zur Durchführung des Verfahrens nach einem der Ansprüche 1 bis 7 aufweist.

**14.** Verfahren zum indirekten Messen der Änderungen des Drehmoments eines eine Hauptwicklung, eine Hilfswicklung und einen Motor-Kondensator aufweisenden Induktionsmotors in einer Betätigungsvorrichtung zum Antrieb einer Last in einer domotischen Installation, **gekennzeichnet durch** einen Schritt zum Erfassen des Zeitpunkts, an welchem die Spannungen an den Klemmen der Hauptwicklung und der Hilfswicklung gleich sind, und **durch** einen Schritt zum Messen einer Spannung, die wenigstens die Spannung an den Klemmen des Motor-Kondensators eine Viertelperiode nach dem ersterwähnten Schritt umfasst.

**15.** Betätigungsvorrichtung mit Hardware-Mitteln (CPU, IN1, IN2; CTL, IN1, IN2) mit Software-Mitteln zur Durchführung des Verfahrens nach Anspruch 14.

**Fig. 1**

**Fig. 2**

**Fig. 3**

**Fig. 4**

Fig. 5

Fig. 6

Fig. 7

Fig. 8

Fig. 9

Fig. 10

**Fig. 11**

ST

Conduction de D3 ou D4 — E10

D3 | D4

**E11**
Enregistrer S1
Surveiller D3
Activer TR

**E14**
Enregistrer S2
Surveiller D4
Activer TR

**E12**
Sur fin de conduction de D3 :
Activer tempo TSCR
Activer tempo TSCR + T/2
Activer Tempo_U0 = T/4

**E15**
Sur fin de conduction de D4 :
Activer tempo TSCR
Activer tempo TSCR + T/2
Activer Tempo_U0 = T/4

**E13**
Sur début de conduction de D3 :
Activer Tempo_UC = T/4
Mesurer URA

**E16**
Sur début de conduction de D4 :
Activer Tempo_UC = T/4
Mesurer URA

**E17**
Si URA différent de 0, alors :
Désactiver TR
Enregistrer S0, retour ST

ST

**E18**
Sur fin de Tempo_U0 :
Mesurer URA
En déduire tension secteur

**E19**
Sur fin de Tempo_UC :
Mesurer URA
En déduire évolution temporelle
de UC

**E20**
Si variation de UC = butée ou
obstacle, alors :
Désactiver TR
Enregistrer S0

ST

# Fig. 12

| | |
|---|---|
| Détecter l'égalité des tensions U1 et U2 | E21 |
| Attendre un quart de période | E22 |
| Mesurer une tension contenant UC ou une fraction de UC | E23 |
| Déduire des variations de cette tension un signal d'arrêt du moteur | E24 |
| Si signal d'arrêt, alors ouvrir TR | E25 |

# Fig. 13

MOT

P11

P12

U1

Uc  CM  W1  W2

U2

IN11  IN12

CTL  OUT10

GND

AC-N

N0

TR

**EP 1 729 408 B1**

**Documents brevets cités dans la description**

- WO 2004109903 A

- FR 2770699